# EUROPEAN PATENT APPLICATION

(11) **EP 1 193 636 A1**
(43) Date of publication of application: **03.04.2002**
(21) Application number: 01902735.8
(22) Date of filing: 02.02.2001
(51) Int. Cl.: G06F 17/60

(54) **METHOD AND SYSTEM FOR MANAGING RECEIVED ORDER**

(30) Priority: 02.02.2000 JP 2000025727
(71) Applicant: SEIKO EPSON CORPORATION, Tokyo 160-0811 (JP)
(72) Inventor: Haji, Hisao, Suwa-Shi, Nagano 392-8502 (JP); Goto, Eriko, Suwa-Shi, Nagano 392-8502 (JP)
(74) Representative: Sturt, Clifford Mark
(86) International application number: JP0100734
(87) International publication number: WO0157749

(57) **Abstract**

A Web page transmission section 4 transmits a Web page 10 with a quotation calculation program added thereto from a server 2. A data reception section 5 receives a quotation calculation result 11. When an analysis section 6 determines that the quotation calculation result is valid, a quotation issuing section 12 issues a formal quotation. In other cases, a quotation recalculation section 7 operates. A timer section 8 measures the period of time elapsed from transmission of the Web page 10 until a response to the transmission. As a result, an erroneous quotation is prevented from being issued even when the quotation calculation program in the Web page 10 has been tampered with.

## Description

### FIELD OF THE INVENTION

The present invention relates to a management method for receiving orders and a management system for receiving orders that are suitable for operations to calculate price quotations for received orders in a system that receives orders and sells goods through a network.

### PRIOR ART

The use of systems for receiving orders and selling goods through a wide area network such as the Internet is rapidly becoming popular. These systems have the advantage in which distribution costs can be reduced and good quality products can be provided at low prices. The systems of this type may use Web pages to provide abundant and detailed product information to the users, and can receive orders including options from the users. Orders placed by the users are transmitted from receiving terminals operated by the users to the server. An operator who is in charge of receiving orders may prepare quotations according to the contents of the orders, and transmits the same to the user. The user may place an order after confirming the content of the quotation.

However, the conventional technique described above has the following problems that need to be solved.

When the number of orders received from the users or the number of requests for quotation increases, the number of operators who are in charge of taking orders need to be increased, unless otherwise, smooth services cannot be provided. As a result, the manpower expenses increase and the costs increase. Furthermore, it is not easy to train many operators so that they will have abundant technical knowledge about the products. In this connection, the inventors of the present application have developed a method for providing a program for implementing a guidance relating to the products in a Web page, and further calculating a quotation in real time. The Web page is downloaded for use onto a receiving terminal that is used by the user.

When products are selected by referring to the guidance on the Web page, the calculation quotation program is executed and a result of quotation calculation is immediately displayed to the user. Even when the receiving terminal is separated from the server, the user can use the Web page and repeatedly perform quotation calculations. When the user decides a combination of preferred products or options, the user transmits a result of the quotation to the server.

The server side receives the result of the quotation, and immediately prepares a formal quotation. A Web page displaying the formal quotation is transmitted to the user; and a purchase agreement is concluded when the user confirms the content. Therefore, it becomes possible to receive orders without intervention of an operator who is in charge of receiving orders. However, in the system described above, the Web page download onto the receiving terminal that is used by the user includes information for prices of products and calculation formulae needed for the quotation calculation.

If the content thereof is changed for some reasons or intentionally tampered by the user, a purchase agreement based on an erroneous quotation may be concluded. Also, when a quotation result, which is obtained by a Web page that was transmitted before the price and the specification were changed, is send to the server in a later date, it is likely that an erroneous quotation may be issued.

### DESCRIPTION OF THE INVENTION

The present invention employs the following compositions to solve the problems described above.

### <Composition 1>

A management method for receiving orders, comprising: transmitting a Web page having a program for calculating a quotation added thereto to a receiving terminal operated by a user through a network; when a result of a calculated quotation at the receiving terminal is returned to the server, conducting an analysis of the result of the calculated quotation on the server; and when a determination is made based on a result of the analysis that the result of calculated quotation is appropriate, executing a process to validate the quotation.

The server transmits Web pages to the receiving terminal through the network. The server, the receiving terminal and the network may be used for any purposes or may have any functions. A Web page with a program to calculate a quotation added thereto is displayed on the receiving terminal of the user. When the user selects several products on the Web page, the program to calculate a quotation calculates the total sale price therefor based on the selection result and displays the same. By utilizing this Web page, calculation services can be provided to the user without giving a load to the server.

The result of the quotation calculation includes information relating to the products selected by the user and the calculated value. The result of the quotation calculation returned from the receiving terminal is analyzed by the server. When the Web page is rewritten by tampering or the like, data that is not appropriate to the result of quotation calculation may be included. The server detects this by the analysis, and preemptively prevents an erroneous quotation from being issued.

### <Composition 2>

In the management method for receiving orders according to Composition 1, the management method for receiving orders has the feature that the analysis process includes a process for examining appropriateness of product information included in the result of the quotation calculation transmitted from the receiving terminal.

The product information included in the result of the quotation calculation is information indicating the products that are selected by the user using the Web page. If the product information contains a selection of a product that cannot be possibly present or an impossible combination of products, a determination is made that a Web page under the normal condition was not used to form the quotation. It is noted that the products include services and the like to be provided to the users.

### <Composition 3>

A management method for receiving orders, comprising: transmitting a Web page having a program for calculating a quotation added thereto to a receiving terminal operated by a user through a network; and when a result of a calculated quotation on the receiving terminal is returned to the server, executing a process to validate the quotation if a time period between the transmission of the Web page and the reception of the returned quotation is within a specified time range.

An erroneous quotation is prevented from being issued in the case, for example, when a quotation result, which is obtained using a Web page that was transmitted before data that is the basis for the quotation, such as, for example, prices and specification, was changed, is returned to the server at a later date. In other words, the specified time may be set such that only a quotation that uses a Web page that is formed based on the latest data is made valid.

### <Composition 4>

A management method for receiving orders, comprising: transmitting a Web page having a program for calculating a quotation added thereto to a receiving terminal operated by a user through a network; and when a result of a calculated quotation on the receiving terminal is returned to the server, executing a process to validate the quotation when a version of the Web page is within a specified range.

An erroneous quotation is prevented from being issued in the case, for example, when a quotation result, which is obtained using a Web page that was transmitted before the prices and specification were changed, is returned to the server at a later date. In other words, the version may be set such that only a quotation that uses a Web page that is formed based on the latest data is made valid. A version having a minor change in which there is no substantial changes in the content is a version within the specified range.

### <Composition 5>

A management method for receiving orders, comprising: transmitting a Web page having a program for calculating a quotation added thereto to a receiving terminal operated by a user through a network; when a result of a calculated quotation on the receiving terminal or information needed to calculate a quotation is returned to the server, performing a recalculation on the server under a condition identical to a condition in which the quotation calculation is performed on the receiving terminal; and issuing a corresponding quotation based on the result of the recalculation.

The "condition identical to a condition in which the quotation calculation is performed on the receiving terminal" refers to a situation in which - the same products are selected in the same combination.

The "recalculation" refers to performing a calculation required to issue a quotation using the latest correct data for unit prices of the products stored on the server side. Since the recalculation is performed, the entirety of the result of quotation calculation does not have to be returned, and only a minimum information required for a quotation calculation, in other words, the recalculation, may be returned. As a result, an erroneous quotation is completely prevented from being issued even when a problem occurs in the quotation calculation program in the Web page.

### <Composition 6>

In the management method for receiving orders according to any one of Composition 1 through Composition 4, the management method for receiving orders has the feature that a recalculation is performed on the server under a condition identical to a condition in which the quotation calculation is performed on the receiving terminal, and a corresponding quotation is issued based on the result of the recalculation.

The above is a combination of Composition 5 and any one of Composition 1 through Composition 4. Even when the quotation calculation performed on the receiving terminal is valid, the recalculation can be performed unconditionally. The result of the quotation calculation may be used or may not be used at the receiving terminal.

### <Composition 7>

In the management method for receiving orders according to Composition 5 or Composition 7, the management method for receiving orders has the feature that, when a corresponding quotation is issued based on the result of recalculation, the user is notified of the recalculation that has been conducted.

When the recalculation is performed automatically, the content of the recalculation will be different from the result of quotation calculation performed by the Web page displayed on the terminal that is used by the user. Accordingly, when the quotation is issued and transmitted to the user, the user is also notified for acknowledgment that the recalculation has been performed.

### <Composition 8>

In the management method for receiving orders according to any one of Composition 1 through Composition 5, the management method for receiving orders has the feature that the quotation calculation program that is transmitted to the receiving terminal operated by the user includes a Web page tampering detection program added thereto.

It is difficult to detect whether a Web page that is used by the user is tampered with only from the result of quotation calculation returned from the receiving terminal to the server. Therefore, the Web page tampering detection program is included in a Web page that is transmitted to the user. The tampering detection program detects whether or not data, such as, for example, unit prices of products included in the Web page is tampered with. When it detects that the data has been rewritten, a result of the detection is informed to the server or the user is warned in order to prevent an erroneous quotation from being issued.

### <Composition 9>

In the management method for receiving orders according to any one of Composition 1 through Composition 5, the management method for receiving orders has the feature that the quotation calculation program that is transmitted to the receiving terminal operated by the user includes a monitoring program to detect a quotation calculation that violates a specified rule.

When procedures in the quotation calculation on the Web page are altered, a calculation that violates the rule will be performed. The monitoring program detects based on the calculated values that such a calculation has been conducted, and notifies a result of the detection to the server, or gives a warning to the user, to thereby prevent an erroneous quotation from being issued.

### <Composition 10>

In the management method for receiving orders according to Composition 5, the management method for receiving orders has the feature that a result of the recalculation on the server side and a result of quotation calculation returned from the receiving terminal to the server are compared; and, when there is a discrepancy therebetween, a cause of the discrepancy that is generated is searched for and a result of the search is recorded.

The search is conducted by comparing product information, comparing intermediate data in the process of the quotation calculation, and the like. When a result of the recalculation performed on the server side is adopted, the cause of the discrepancy occurred with respect to the result of quotation calculation performed on the receiving terminal side is searched for and recorded. As a result, a countermeasure to remove such cause can be made possible later.

### <Composition 11>

In the management method for receiving orders according to Composition 5, the management method for receiving orders has the feature of comprising: including a program to save log data indicating a calculation process in the Web page when a quotation calculation using the Web page is executed on the receiving terminal side, and transmitting the log data from the receiving terminal to the server together with the result of the quotation.

The log data is intermediate data obtained in the calculation process on the receiving terminal side, product information used in the calculation, and the like. When a result of the recalculation performed on the server side is adopted, the log data presents very useful information for searching for causes of the discrepancy occurred with respect to the result of the quotation calculation performed on the receiving terminal side,

### <Composition 12>

A management system for receiving orders, comprising: a Web page transmission section that transmits a Web page having a program for calculating a quotation added thereto to a receiving terminal operated by a user through a network; and an analysis section that, when a result of a calculated quotation on the receiving terminal is returned to the server and if the result of the calculated quotation is determined to be appropriate by the server, makes a determination that the result of the calculated quotation is valid.

The above relates to a system for implementing the method of Composition 1 in accordance with the present invention.

### <Composition 13>

A management system for receiving orders, comprising: a Web page transmission section that transmits a Web page having a program for calculating a quotation added thereto to a receiving terminal operated by a user through a network; and a timer section that, when a result of a calculated quotation on the receiving terminal is returned to the server, and when a time period between the transmission of the Web page and the reception of the returned quotation is within a specified time range, makes a determination that the result of the calculated quotation is valid.

The above relates to a system for implementing the method of Composition 3 in accordance with the present invention.

### <Composition 14>

A management system for receiving orders, comprising: a Web page transmission section that transmits a Web page having a program for calculating a quotation added thereto to a receiving terminal operated by a user through a network; and an analysis section that, when a result of a calculated quotation on the receiving terminal is returned to the server and if a version of the Web page is within a specified range, validates the quotation.

The above relates to a system for implementing the method of Composition 4 in accordance with the present invention.

### <Composition 15>

A management system for receiving orders, comprising: a Web page transmission section that transmits a Web page having a program for calculating a quotation added thereto to a receiving terminal operated by a user through a network; and a quotation recalculation section that, when a result of a calculated quotation on the receiving terminal or information required to calculate a quotation is returned to the server, performs a recalculation on the server under a condition identical to a condition in which the quotation calculation is performed on the receiving terminal, and issues a corresponding quotation based on the result of the recalculation.

The above relates to a system for implementing the method of Composition 5 in accordance with the present invention.

### <Composition 16>

A Web page to be transmitted through a network from a server to a receiving terminal operated by a user, the Web page having the feature of comprising: a quotation calculation program that performs a quotation calculation based on a product selection made by the user on the Web page and displays a result thereof on the Web page; and a Web page tampering detection program that determines at a specified timing interval whether or not portions of the Web page whose alteration is prohibited has been tampered with .

The above relates to a Web page itself that implements the methods described above in accordance with the present invention.

### <Composition 17>

A Web page to be transmitted through a network from a server to a receiving terminal operated by a user, the Web page having the feature of comprising: a quotation calculation program that performs a quotation calculation based on a product selection by the user on the Web page and displays a result thereof on the Web page; and a monitoring program that detects a quotation calculation that violates a specified rule at a specified timing interval.

The above relates to a Web page itself that implements the methods described above in accordance with the present invention.

### BRIEF DESCRIPTON OF THE DRAWINGS

Fig. 1 shows a block diagram of an exemplary embodiment of a management system for receiving orders in accordance with the present invention.

Fig. 2 shows an illustration that describes an example of a Web page.

Fig. 3 (a) shows an illustration that describes a method for analyzing a quotation calculation result 11, and Fig. 3 (b) shows a flowchart of an operation of a server that focuses on an operation of an analysis section 6 that uses the quotation calculation result 11.

Fig. 4 shows a flowchart of an operation of the server mainly centered on an operation of a timer section.

Fig. 5 shows a flowchart of an example of a Web page tampering detection program and an operation of a monitoring program.

### EMBODIMENTS OF THE INVENTION

Embodiments of the present invention are described below with reference to specific examples.

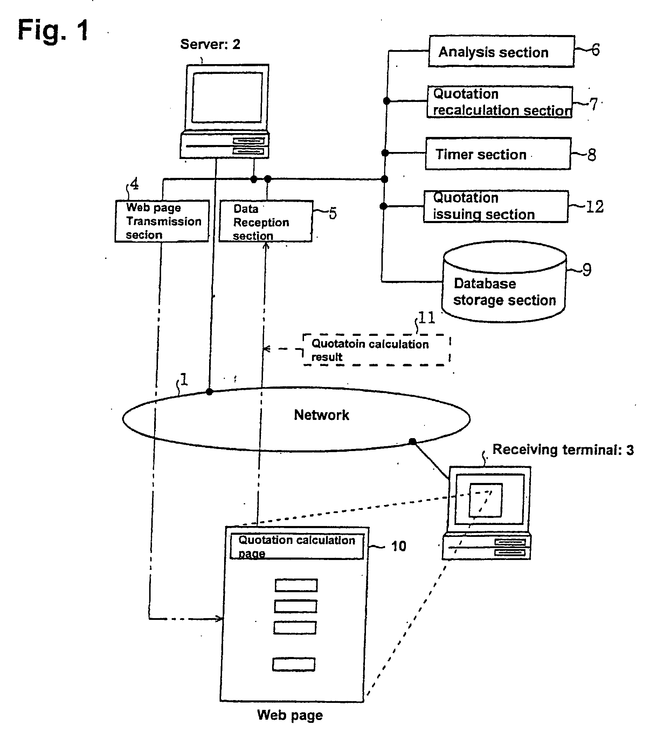

Fig. 1 shows a block diagram of an exemplary embodiment of a management system for receiving orders in accordance with the present invention.

A network 1 in the figure is the Internet. It is noted that the description is made with reference to the Internet as an example. However, the present invention is also applicable to other networks such as a telephone network, an Intranet and the like. The network 1 connects to a server 2 and a receiving terminal 3. In this example, a system for receiving orders and selling personal computers and their peripheral equipment through the Internet is introduced.

In this system, the server 2 provides, through the network 1, a Web page 10 that calculates a quotation for a personal computer and its options to be sold to the receiving terminal operated by the user. The server 2 is equipped with a Web page transmission section 4, a data reception section 5, an analysis section 6, a quotation recalculation section 7, a timer section 8, a database storage section 9 and a quotation issuing section 12.

The Web page transmission section 4 has a function to transmit the Web page 10 with a quotation calculation program added thereto. The Web page 10 is transmitted through a network such as the Internet, and is formed from data whose content can be displayed by a browser regardless of the type of the computer, such as, for example, data in HTML (hypertext markup language) format.

For example, JavaScript (and object-oriented script language developed by Netscape) programs that execute a display control of characters, a simple calculation and the like may be incorporated into the Web page.

The Web page transmission section 4 refers to the database storage section 9 and incorporates information such as product codes and prices of a personal computer and options that is required for a quotation calculation together with the quotation calculation program. The Web page 10 displays lists of parts to be selected to the user using a form at the receiving terminal 3. The quotation calculation program adds prices of parts selected and displays the result as a quotation amount.

When the Web page 10 is transmitted to the receiving terminal that is operated by the user, the user utilizes the Web page 10, whereby calculation of quotations can be executed for personal computers of various specifications and the results are displayed in real time. At that moment, since there is no need to communicate with the server 2, a carefully thought out quotation calculation service can be provided without giving a load to the server 2. Also, it is noted that the calculation of quotations on the receiving terminal 3 can be performed off-line. Therefore, when the user is in a dial-up connection, the connection may be once turned off; and when a desired configuration for a computer is decided, the connection may be re-established, and a formal quotation request can be made. In this manner, the user can have sufficient time to consider and can also cut down the communication costs.

The Web page transmission section 4 generates a Web page having such functions and transmits the same.

As a result of the quotation calculation using the Web page, the user decides on specifications of his preference, and makes a formal quotation request. The quotation request is returned to the server by a data transmission function of the browser. The data reception section 5 has a function to receive the data through the network. The analysis section 6 has a function to analyze at the server 2 whether or not the result of quotation calculation is appropriate. When the analysis section 6 makes a determination that the result of quotation calculation is valid, the quotation issuing section 12 issues a formal quotation.

The Web page 10 includes data for, for example, prices of products required for a quotation calculation, and the quotation calculation program automatically executes the quotation calculation. When the selection of products and the quotation calculation are normally performed, a quotation calculation result 11 returned from the receiving terminal 3 to the server is utilized as it is, such that a formal quotation can be issued. In other words, when the data indicating the selected products included in the quotation calculation result 11 and the result of the sum of the unit prices are used as they are, calculation on the server 2 is not required. However, there are possibilities that the content may be changed by some unknown reasons or may be intentionally tampered by the user.

The analysis section 6 performs an analysis whether the products selected by the user to request a quotation include improper products, whether the products are selected in a combination that cannot be selected, whether the quotation amount cannot possibly be true, to thereby determine the appropriateness of the quotation calculation result 11.

The quotation recalculation section 7 has a function to recalculate a quotation at the server 2 under the same condition in which the quotation is calculated on the receiving terminal 3, when the result of quotation calculation obtained at the receiving terminal 3 is returned to the server 2.

When the analysis section 6 determines that the quotation calculation result 11 is not appropriate, the quotation recalculation section 7 operates.

Alternatively, the following method can be adapted. When the user makes a formal quotation request, only the data related to the products selected by the user included in the quotation calculation result 11 is used, and a quotation is always recalculated. In this manner, even when a problem occurs in the quotation calculation program in the Web page 10, the situation in which an erroneous quotation is issued can be perfectly prevented.

The quotation calculation is automatically executed at the user-side in order to meet the demands by the users who want to know results of quotation calculations in real time.

If the server-side 2 calculates a quotation at each request, the load for the calculation process is imposed on the server-side 2.

If many users request for quotation calculations at the same time, the processing capability of the server lowers and the traffic on the network 1 increases. As a result, the speed to display the result on the receiving terminal 3 may slow down. By transmitting the Web page having the automatic calculation function to the user's receiving terminal 3, the calculation processing load in trial quotation calculations that may be imposed on the server-side can be alleviated.

The quotation calculation result 11 obtained at the receiving terminal 3 is returned to the server 2. This means that the user provides a formal quotation request, which is not a trial quotation request. The server-side performs a recalculation only in such a case, which does not result in a substantial increase in the load. Accordingly, while the quotation calculation function is retained at the user-side, a harmful influence that may be caused by tampering on the Web page can be prevented.

It is noted that, when the quotation calculation result at the receiving terminal does not concur with a result of the recalculation, a measure may preferably be taken to notify the same to the user.

The timer section 8 has a function to measure time between the time when the Web page 10 is transmitted and the time when the Web page 10 is returned, when the quotation calculation result 11 on the receiving terminal 3 is returned to the server 2. When the measured time is within a predetermined time range, a determination is made that the quotation is valid. In other words, when the quotation calculation result 11 is returned to the server 2 after a substantially long time has passed, the quotation recalculation section 7 operates automatically . As a result, an erroneous quotation is prevented from being issued, for example, in the case where a quotation result that was obtained using a Web page transmitted before prices and specifications were changed is returned to the server at a later date.

The predetermined time may be set such that, for example, only a quotation that uses the latest version of a Web page is made valid.

Although a Web page may be formed based on the latest data of unit prices of products and provided to the user, a quotation calculation result obtained by the use of the Web page may arrive at the server after a long time has passed. In such a case, there are possibilities that the unit prices of the products, the delivery situation, the inventory situation and the like may have been changed. For example, when the present invention is used in quotations for a tour plan by a travel agency, there are possibilities that the vacancy situation of reserved seats on the transportation, the number of applicants with respect to the number limit in the tour, the vacancy situation of hotel rooms and the like may frequently change in a short time.

Accordingly, the use of the function of the timer section 8 has the effect that the quotation calculation can be redone with the latest information. At the same time, it provides a countermeasure against tampering with the Web page. The timer section 8 may also be used to expand the function of the analysis section 6, or may be used instead of the analysis section 6 if the analysis section 6 is not provided. It is noted that, if a Web page includes data that identifies its version, the analysis section 6 can check the version of the Web page. When the version of the Web page is the latest version or within a predetermined version range that does not cause any problem to the quotation calculation, the result of the quotation calculation is made valid.

A more specific operation of the system shown in figure 1 is described below.

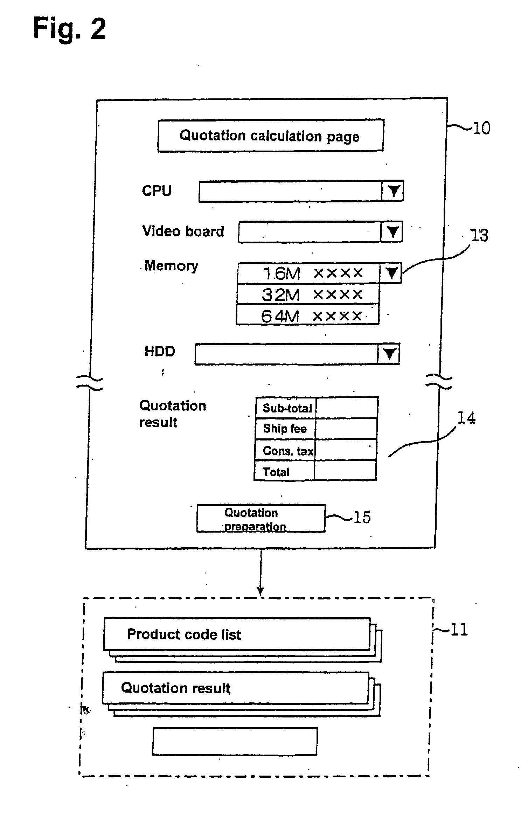

Fig. 2 shows an illustration that describes an example of the Web page. The Web page 10 in the figure is an example that is transmitted to the receiving terminal 3 and used for a quotation calculation. Initially, the user selects parts of his preference using a selection list 13 shown in the figure. In the case of a personal computer, the user freely selects a CPU, a video board, a memory capacity and the like.

When parts are selected, a script for a quotation calculation that is written in the Web page 10 calculates a quotation using information relating to unit prices of the parts written in the Web page 10 and displays a calculated value in a section of a quotation result 14. When the user completes selection of all the required parts and clicks a quotation-preparation button 15, a quotation calculation result 11 is transmitted to the server 2. The quotation calculation result 11 includes a quotation calculation value composed of a list of product codes of the selected products, a subtotal, a shipping fee, a sales tax, unit prices and the like.

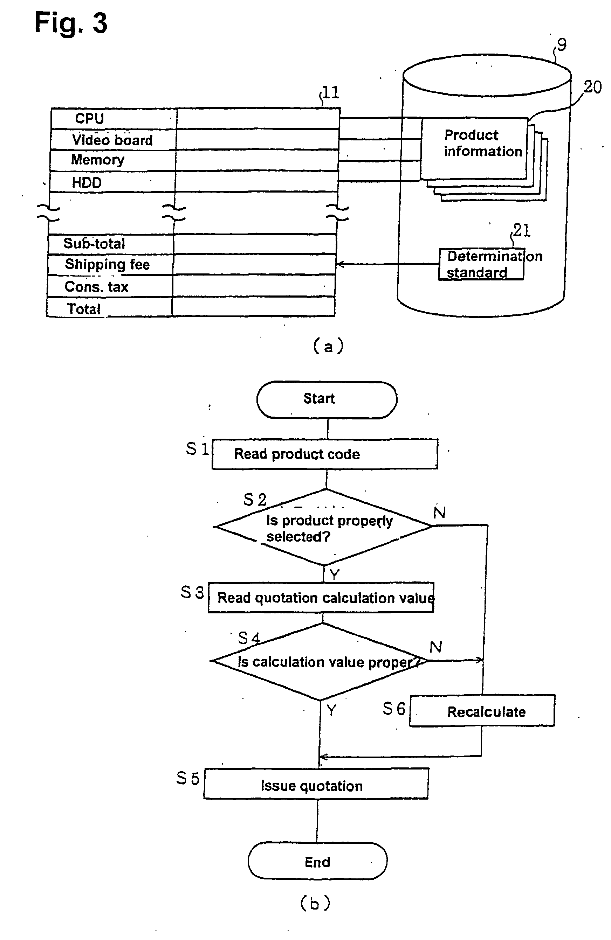

Fig. 3 (a) shows an illustration that describes a method for analyzing the quotation calculation result 11, and Fig. 3 (b) shows a flowchart of an operation of a server that focuses on an operation of the analysis section 6 in which the quotation calculation result 11 is used.

As shown in Fig. 3 (a), the list of product codes included in the quotation calculation result 11 received by the server is compared with product information 20 stored in the database storage section 9 for verification. As a result, for example, when a product code of a product that should not be included in any one of the selection lists is included or an improbable combination of products is present, the analysis section 6 makes a determination that they are not proper.

Also, the quotation calculation amount made of a subtotal, a shipping fee, a sales tax, unit prices and the like is compared with predetermined determination criteria 21.

For example, when the respective calculated values are 0 or negative, a determination is made that the quotation is not valid. In addition, the determination criteria 21 can contain a variety of other contents.

Fig. 3 (b) shows an operation of the analysis section 6. First, the analysis section 6 reads the product codes in step S1.

The database storage section 9 is looked up in step S2 to make a determination whether or not the products are properly selected. Further, the quotation calculation values are read in step S3, and a determination is made in step S4 as to whether or not the quotation calculation values are proper.

When it is determined in step S2 and step S4 that the quotation calculation result 11 is entirely proper, the quotation issuing section 12 shown in Fig. 1 is operated in step S5, and the quotation calculation result 11 that is returned from the receiving terminal 3 is used as it is to issue a formal quotation.

On the other hand, when it is determined in step S2 or step S4 that a part of the quotation calculation result 11 is not proper, the quotation recalculation section 7 is operated to recalculate a quotation using the list of product codes included in the quotation calculation result 11.

Then, in step S5, the quotation issuing section 12 is operated to issue a formal quotation using a result calculated by the quotation recalculation section 7. It should be noted that, when the list of product codes contains an error to the extent that a recalculation cannot be performed, the same is notified from the quotation recalculation section 7 to the quotation issuing section 12, and instead of a Web page displaying a quotation, a Web page displaying a message notifying that a quotation cannot be made is generated. It is noted that, for example, as described below, if the quotation is always recalculated whenever a formal quotation request is submitted from the user, the receiving terminal may transmit only the minimum data required for a quotation calculation to the server.

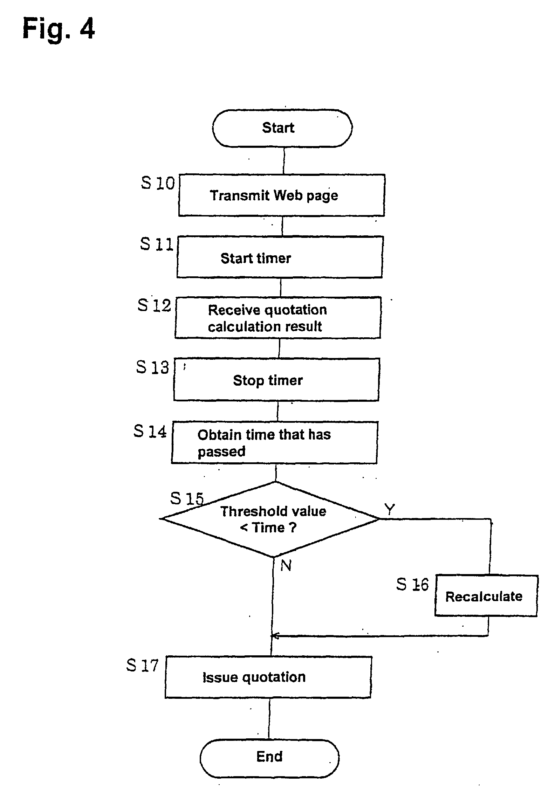

Fig. 4 shows a flowchart of an operation of the server that focuses on an operation of the timer section. In step S10 in the figure, when the Web page transmission section 4 of the server 2 shown in Fig. 1 transmits the Web page, the timer section 8 starts a timer in step S11. In step S12, when the data reception section 5 receives the quotation calculation result 11 from the receiving terminal 3, the timer section 8 stops the timer in step S13. Then, in step S14, the timer section 8 obtains from the timer the period of the time that has elapsed .

In step S14, the elapsed time is compared with a threshold value. The threshold value is set at to appropriate value, such as, for example, one-hour, three hours, three days or the like.

When the quotation calculation result 11 is received after a period of time longer than the threshold value, the process advances to step S16 to perform a recalculation. Thereafter, in step S17, a process for issuing a quotation described above with reference to Fig. 3 (b) is conducted. The processes in step S16 and step S17 are the same as those in step S6 and step S5 shown in Fig. 3 (b).

Since a Web page is transmitted to the receiving terminal, it is possible for the user to tamper with the Web page. In this connection, in the following example, a tampering detection program is added to the Web page 10. The tampering detection program has a function to examine whether or not data, such as, for example, unit prices of products have been altered.

When it is detected that the data has been altered, a result of the detection is included in a quotation calculation result to be transmitted to the server. As a result, the server side can automatically make a determination whether or not a recalculation should be performed. Of course, other measures that may be taken when a Web page is altered can be implemented. Such measures include, for example, sending a warning note to the user, prohibiting execution of a quotation calculation and the like.

For example, the Web page tamparing detection program may successively obtain data for portions that should be prevented from being changed by tamparing and perform a predetermined calculation process, and may make a determination of the presence or the absence of an alteration based on whether or not a result of the predetermined calculation process concurs with a predetermined value obtained in advance.

The calculation process may be conducted at any appropriate timing. It is difficult to detect an alteration in a Web page that is used by the user only from the quotation calculation result 11 that is returned from the receiving terminal to the server. Therefore, the inclusion of the tamparing detection program in a Web page that is to be transmitted to the user described above is very effective.

For example, whenever a quotation request is issued, the server side may always perform a recalculation of the quotation and compare a result of the recalculation at the server side and the quotation calculation result 11 that is returned from the receiving terminal to the server to check if there is a discrepancy between the two. If there is a discrepancy between the two, a determination is made that a certain abnormality occurred during the calculation process for the quotation calculation, and a predetermined process is automatically executed. The predetermined process may include, for example, a method of searching in detail for a cause of the discrepancy that is generated, recording a result of the search and storing the same as data for improving the system.

For example, when a quotation calculation using a Web page is executed at the receiving terminal side, a method of storing log data indicating a process of the calculation may be employed. The log data together with the quotation result may be transmitted from the receiving terminal to the server, such that the server can make a detailed analysis thereof. For these purposes, the quotation result transmitted from the receiving terminal to the server, the user code and other data may preferably be stored even after the quotation recalculation is conducted.

Also, in addition to the above, a monitoring program may be added to detect a quotation calculation that violates a predetermined rule. When a quotation calculation program added to the Web page automatically performs a quotation calculation, the program may detect if data that should be added has not been added, an improbable value has been subtracted, a quotation result that appears to be improper in view of the number of the selected products has been provided, and the like. The calculation process can be made at any timing, but may be conducted simultaneously with the quotation calculation. The same effects as those provided by the tamparing detection program can be provided.

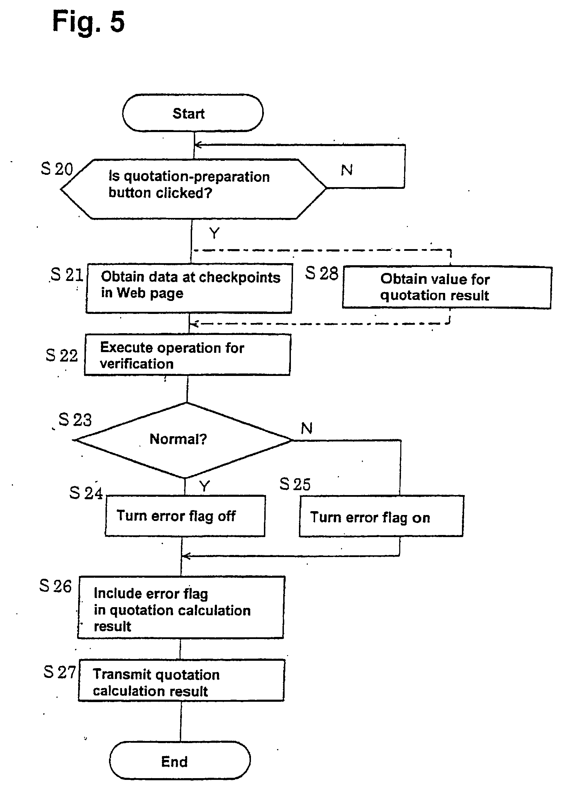

Fig. 5 shows a flowchart of an example of the Web page tampering detection program and an operation of the monitoring program. A process indicated by a dot-and-dash line in the figure is an operation conducted by the monitoring program.

First, in step S20, the quotation-preparation button 15 shown in Fig. 2 is monitored; and only when it is clicked, the following operations are executed. In the following step S21, the tampering detection program obtains data at checkpoints in the Web page, and executes an operation for verification in step S22.

In step S23, a determination is made whether or not a result of the above operation is normal. When the result is normal, an error flag is turned off in step S24. On the other hand, when an abnormality is found, the process proceeds to step S25, and an error flag is turned on. In step S26, the error flag is included in a quotation calculation result. In other words, data for informing the presence or the absence of a detected abnormality to the server is set. Thereafter, in step S27, a result of the quotation calculation is transmitted. Also, the monitoring program proceeds from step S20 to step S28 and obtains a value for the quotation result 14 shown in Fig. 2. Then, in step as 22, the value is verified.

As described above, by the inclusion of the tampering detection program and the monitoring program in a Web page, the server side can be informed of whether or not the quotation calculation result 11 is normal. Therefore, an analysis process at the analysis section 6 is facilitated, and the load to the server is alleviated. Also, for example, determination results of the tampering detection program and the monitoring program may be displayed on the Web page. As a result, the user is notified that the quotation by the Web page is not valid. Furthermore, when necessary items are not inputted or parts of an impossible combination are selected, an error message may be displayed when the quotation-preparation button is clicked.

It is noted that the functional blocks shown in Fig. 1 may be formed from individual program modules, or may be formed from an integrated program module. Also, all of the functional blocks or a part thereof may be formed from hardware with logic circuits. Also, each of the program modules may be operated by implementing the same in an existing application program or may be operated as an independent program.

A computer program that realizes the invention described above may be stored in a computer readable storage medium, such as, for example, CD-ROM, and can be installed for the use. Also, the computer program can be downloaded onto a computer memory through the network for the use.

Also in the examples described above, the description is made with reference to the case in which a Web page is transmitted through a network to a receiving terminal, and a quotation calculation result is returned to a server. However, depending on the characteristics of the network, the data can be returned in a variety of formats. In addition to the examples described above, the present invention may be used in Net businesses to provide travel plans by travel agencies, plans for various events and the like. As a result, the convenience of the customers is met, and the safety and reliability in commercial transactions using networks can be improved.

## Claims

1. A management method for receiving orders, comprising:
transmitting a Web page having a program for calculating a quotation added thereto to a receiving terminal operated by a user through a network;
when a result of a calculated quotation on the receiving terminal is returned to the server, conducting an analysis of the result of the calculated quotation on the server; and
when a determination is made based on a result of the analysis that the result of calculated quotation is appropriate, executing a process to validate the quotation.

2. A management method for receiving orders according to claim 1, wherein the analysis process includes a process for examining appropriateness of product information included in the result of the quotation calculation transmitted from the receiving terminal.

3. A management method for receiving orders, comprising: transmitting a Web page having a program for calculating a quotation added thereto to a receiving terminal operated by a user through a network; and when a result of a calculated quotation at the receiving terminal is returned to the server, executing a process to validate the quotation if a period of time between the transmission of the Web page and the reception of the returned quotation is within a specified time range.

4. A management method for receiving orders, comprising: transmitting a Web page having a program for calculating a quotation added thereto to a receiving terminal operated by a user through a network; and when a result of a calculated quotation at the receiving terminal is returned to the server, executing a process to validate the quotation if a version of the Web page is within a specified range.

5. A management method for receiving orders, comprising: transmitting a Web page having a program for calculating a quotation added thereto to a receiving terminal operated by a user through a network; when a result of a calculated quotation at the receiving terminal or information necessary to calculate a quotation is returned to the server, performing a recalculation on the server under a condition identical with a condition in which the quotation calculation is performed at the receiving terminal; and issuing a corresponding quotation based on the result of the recalculation.

6. A management method for receiving orders according to any one of claim 1 through claim 4, wherein a recalculation is performed on the server under a condition identical with a condition in which the quotation calculation is performed on the receiving terminal, and a corresponding quotation is issued based on the result of the recalculation.

7. A management method for receiving orders according to claim 5 or claim 6, wherein, when a corresponding quotation is issued based on the result of recalculation, the user is notified of the recalculation that has been conducted.

8. A management method for receiving orders according to any one of claim 1 through claim 5, wherein the quotation calculation program that is transmitted to the receiving terminal operated by the user includes a Web page tampering detection program added thereto.

9. A management method for receiving orders according to any one of claim 1 through claim 5, wherein the quotation calculation program that is transmitted to the receiving terminal operated by the user includes a monitoring program to detect a quotation calculation that violates a specified rule.

10. A management method for receiving orders according to claim 5, wherein a result of the recalculation on the server side and a result of quotation calculation returned from the receiving terminal to the server are compared, and, when there is a discrepancy therebetween, a cause of the discrepancy that is generated is searched for and a result of the search is recorded.

11. A management method for receiving orders according to claim 5, further comprising including a program to save log data indicating a calculation process in the Web page when a quotation calculation using the Web page is executed on the receiving terminal side, and transmitting the log data from the receiving terminal to the server together with the result of the quotation.

12. A management system for receiving orders, comprising:
a Web page transmission section that transmits a Web page having a program for calculating a quotation added thereto to a receiving terminal operated by a user through a network; and
an analysis section that, when a result of a calculated quotation on the receiving terminal is returned to the server and if the result of the calculated quotation is determined to be appropriate by the server, makes a determination that the result of the calculated quotation is valid.

13. A management system for receiving orders, comprising:
a Web page transmission section that transmits a Web page having a program for calculating a quotation added thereto to a receiving terminal operated by a user through a network; and
a timer section that, when a result of a calculated quotation on the receiving terminal is returned to the server and if a time period between the transmission of the Web page and the reception of the returned quotation is within a specified time range, makes a determination that the result of the calculated quotation is valid.

14. A management system for receiving orders, comprising:
a Web page transmission section that transmits a Web page having a program for calculating a quotation added thereto to a receiving terminal operated by a user through a network; and
an analysis section that, when a result of a calculated quotation at the receiving terminal is returned to the server and if a version of the Web page is within a specified range, validates the quotation.

15. A management system for receiving orders, comprising:
a Web page transmission section that transmits a Web page having a program for calculating a quotation added thereto to a receiving terminal operated by a user through a network; and
a quotation recalculation section that, when a result of a calculated quotation on the receiving terminal or information necessary to calculate a quotation is returned to the server, performs a recalculation on the server under a condition identical with a condition in which the quotation calculation is performed on the receiving terminal, and issues a corresponding quotation based on the result of the recalculation.

16. A Web page to be transmitted from a server to a receiving terminal operated by a user through a network, the Web page comprising: a quotation calculation program that performs a quotation calculation based on a product selection by the user on the Web page and displays a result thereof on the Web page; and a Web page tampering detection program that determines at a specified timing interval whether or not portions of the Web page whose alteration is prohibited has been tampered with.

17. A Web page to be transmitted from a server to a receiving terminal operated by a user through a network, the Web page comprising: a quotation calculation program that performs a quotation calculation based on a product selection by the user on the Web page and displays a result thereof on the Web page; and a monitoring program that detects a quotation calculation that violates a specified rule at a specified timing interval.
